# EUROPEAN PATENT APPLICATION

(11) **EP 3 223 230 A2**
(43) Date of publication of application: **27.09.2017**
(21) Application number: 15860656.6
(22) Date of filing: 23.11.2015
(51) Int. Cl.: G06Q 50/10

(54) **DART GAME SERVER SUPPORTING LOGIN, DART GAME APPARATUS, AND COMPUTER PROGRAM RECORDED ON READABLE MEDIUM**

(30) Priority: 21.11.2014 KR 20140163499
(71) Applicant: Hong International Corp., Seoul 152-848 (KR)
(72) Inventor: HONG, Sang Uk, Seoul 135-100 (KR)
(74) Representative: Onsagers AS
(86) International application number: PCT/KR2015/012589
(87) International publication number: WO 2016/080814

(57) **Abstract**

The present disclosure relates to a dart game server, a dart game apparatus, and a computer program recorded in a readable medium, which support log-in, and the present disclosure may provide a dart game server including: an OTP request receiving unit receiving a one time password (OTP) request including at least one of a user ID and a terminal identifier from a user terminal; an OTP generating unit generating an OTP based on at least one of the user ID and the terminal identifier; an OTP transmitting unit transmitting the OTP to the user terminal; an OTP receiving unit receiving the OTP input in a dart game apparatus from the dart game apparatus; an OTP verifying unit comparing the OTP which the OTP transmitting unit transmits to the user terminal and the OTP which the OTP receiving unit receives from the dart game apparatus; and a game start requesting unit requesting a dart game start to the dart game apparatus based on a comparison result of the OTP.

## Description

### [Technical Field]

The present disclosure relates to a dart game server, and more particularly, to a dart game server, a dart game apparatus, and a computer program recorded in readable media, which support log-in.

### [Background Art]

In general, a dart refers to a 'small arrow' and darts is a game in which one makes marks by throwing an arrow-shaped dart pin to a circular target marked with figures. The dart game has an advantage in that anybody can enjoy the dart game anytime and anywhere if there are only an arrow-headed dart and a dart target. In recent years, as various game methods have been developed and a scoring method has been organized, the dart game has been developed as worldwide leisure, and therefore, men and women of all ages have conveniently enjoyed the dart game.

In general, participants of the dart game need to participate in the game at the same time and in the same space in order to enjoy the dart game. However, with the development of a communication technology, electronic dart game apparatuses have been developed in which each of the participants of the dart game may remotely participate in the dart game so as to participate in the game over temporal and spatial constraints and remotely transmit a play result or a play process thereof through a communication network.

The electronic dart game apparatuses may electrically sense a hitting point of the dart target and automatically aggregate scores and provide the aggregated scores to a player.

However, the user needs to use a physical card such as a radio frequency identification reader (RFID) at the time of using the dart game apparatus and when the physical card is lost, there is inconvenience such as reissuing the physical card, and as a result, demands of users for a method in which the user can enjoy the dart game without using the physical card have increased.

### [Disclosure]

### [Technical Problem]

An object to be solved by an embodiment of the present disclosure is to provide a dart game server, a dart game apparatus, and a computer program supporting log-in, which can perform the log-in by an efficient method in the dart game apparatus by using a user terminal.

An object to be solved by another embodiment of the present disclosure is to provide a log-in means which can substitute a physical card such as an RFID in the dart game apparatus.

### [Technical Solution]

The present disclosure may provide a dart game server including: an OTP request receiving unit receiving a one time password (OTP) request including at least one of a user ID and a terminal identifier from a user terminal; an OTP generating unit generating an OTP based on at least one of the user ID and the terminal identifier; an OTP transmitting unit transmitting the OTP to the user terminal; an OTP receiving unit receiving the OTP input in a dart game apparatus from the dart game apparatus; an OTP verifying unit comparing the OTP which the OTP transmitting unit transmits to the user terminal and the OTP which the OTP receiving unit receives from the dart game apparatus; and a game start requesting unit requesting a dart game start to the dart game apparatus based on a comparison result of the OTP.

In an embodiment, the dart game server may further include a log-in determining unit executing log-in so as to perform a game in the dart game apparatus when the comparison results of the OTP coincide with each other.
In another embodiment, the dart game server may be integrally provided in the dart game apparatus and the terminal identifier may include at least one of a phone number of the user terminal, a product serial number of the user terminal, and the number of a USIM card inserted into the user terminal.

In yet another embodiment, the dart game server may further include a storage unit storing at least one of the user ID, the terminal identifier, and the OTP.

In still yet another embodiment, the dart game server may further include an additional authentication unit receiving terminal positional information from the user terminal and receiving dart game apparatus positional information of the dart game apparatus from the dart game apparatus transmitting the OTP to perform an authentication for the log-in in the dart game apparatus by using the terminal positional information and the dart game apparatus positional information.

In still yet another embodiment, the positional information may include at least one of global positioning system (GPS), geographic information systems (GIS), and intelligent transport systems (ITS).

Further, the present disclosure may provide a dart game apparatus including: a display unit displaying information on the dart game apparatus; and an input unit operating a virtual keyboard displayed in the display unit, and a user terminal may receive an OTP received from a dart game server according to an operation of the input unit.

In an embodiment, the input unit may include an upward movement button, a downward movement button, a leftward movement button, a rightward movement button, and an input button.

Furthermore, the present disclosure may provide a dart game system supporting log-in, including: a dart game server receiving a one time password (OTP) request including at least one of a user ID and a terminal identifier from a user terminal, generating an OTP based on at least one of the user ID and the terminal identifier, transmitting the OTP to the user terminal, receiving the OTP input in a dart game apparatus from the dart game apparatus, comparing the OTP which the OTP transmitting unit transmits to the user terminal and the OTP which the OTP receiving unit receives from the dart game apparatus, and requesting a dart game start to the dart game apparatus based on a comparison result of the OTP; a user terminal receiving an application execution request from a user, requesting an OTP request including at least one of the user ID and the terminal identifier to the dart game server, acquiring the OTP from the dart game server, and displaying the OTP to be verified by the user; and a dart game apparatus displaying information on the dart game apparatus and receiving the OTP which the user terminal receives from the dart game server according to an operation of a button unit that operates a virtual keyboard displayed in the display unit.

Moreover, the present disclosure may provide a computer program stored in a computer readable medium and causing a computer to execute the steps including: receiving a one time password (OTP) request including at least one of a user ID and a terminal identifier from a user terminal; generating an OTP based on at least one of the user ID and the terminal identifier; transmitting the OTP to the user terminal; receiving the OTP input in a dart game apparatus from the dart game apparatus; comparing the OTP which the OTP transmitting unit transmits to the user terminal and the OTP which the OTP receiving unit receives from the dart game apparatus; and requesting a dart game start to the dart game apparatus based on a comparison result of the OTP.

### [Advantageous Effects]

According to an embodiment of the present disclosure, a dart game server, a dart game apparatus, and a computer program supporting log-in can perform the log-in by an efficient method in the dart game apparatus by using a user terminal.

Further, according to an embodiment of the present disclosure, a log-in means can be provided, which can substitute a physical card such as an RFID.

### [Description of Drawings]

FIG. 1 is a conceptual diagram illustrating a dart game system supporting log-in according to an embodiment of the present disclosure.
FIG. 2 is a conceptual diagram illustrating an embodiment in which a dart game server is integrally provided in a dart game apparatus according to an embodiment of the present disclosure.
FIG. 3 illustrates an internal configuration diagram of the dart game server according to the embodiment of the present disclosure.
FIG. 4 illustrates a process in which an OTP generating unit generates an OTP according to an embodiment of the present disclosure.
FIG. 5 illustrates an additional authentication unit according to an embodiment of the present disclosure.
FIG. 6 is a block diagram illustrating a dart game apparatus according to an embodiment of the present disclosure.
FIG. 7 is a schematic view illustrating that an OTP is input through an input unit according to an embodiment of the present disclosure.
FIG. 8 is a flowchart illustrating a method for supporting log-in according to an embodiment of the present disclosure.

### [Best Mode]

The objects and effects of the present disclosure and technical components for accomplishing the objects and effects will become obvious with reference to embodiments to be described below in detail along with the accompanying drawings. In describing the embodiment of the present disclosure, a detailed description of known functions or constitutions will be omitted if it is determined that they unnecessarily make the gist of the present disclosure unclear. In addition, terms to be described below as terms which are defined in consideration of functions in the present disclosure may vary depending on the intention or usual practice of a user or an operator.

However, the present disclosure is not limited to embodiments disclosed below but may be implemented in various different forms. However, the embodiments are provided to make the present disclosure be complete and completely announce the scope of the present disclosure to those skilled in the art to which the present disclosure belongs and the present disclosure is just defined by the scope of the claims. Accordingly, the terms need to be defined base on contents throughout this specification.

Hereinafter, the embodiments of the present disclosure will be described in detail with reference to the accompanying drawings.

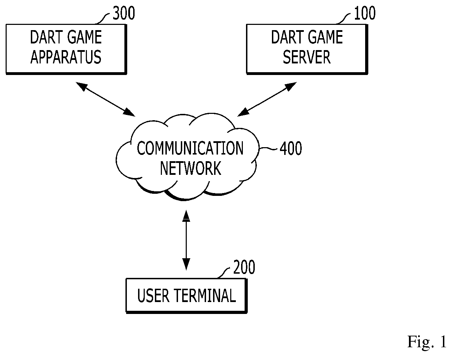

FIG. 1 is a conceptual diagram illustrating a dart game system supporting log-in according to an embodiment of the present disclosure.

Referring to FIG. 1, the dart game system supporting log-in according to the embodiment of the present disclosure may include a dart game server 100, a user terminal 200, and a dart game apparatus 300.

A user may select the dart game apparatus 300 which the user intends to use. The dart game apparatus 300 may be installed in a space in which a user may enjoy a game, such as a bar. A plurality of dart game apparatuses 300 may be provided and the user may select any one of the plurality of dart game apparatuses 300.

The user may select the dart game apparatus 300 which the user intends to use and thereafter, request an OTP for using the selected dart game apparatus 300 to the dart game server 100. When the user requests the OTP to the dart game server 100, the user terminal 200 may transmit a user ID and/or a terminal identifier to the dart game server 100. The dart game server 100 may recognize the user by prestoring the user ID.

The determiner identifier may include information on the user terminal 200. Hereinafter, the terminal identifier will be described in more detail.

In the present specification, information which the user terminal 200 transmits to the dart game server 100 is exemplified as the user ID and the terminal identifier, but the scope of the present disclosure is not limited thereto and various information may be transmitted according to a set-up of the system.

The dart game server 100 may generate the OTP by using the user ID and the terminal identifier. Herein, the OTP may mean a one time password and be generated by a predetermined method based on the user ID and the terminal identifier. A method for generating the OTP may be configured differently according to a method for operating the dart game system according to the embodiment of the present disclosure. For example, the OTP may be generated by using any one algorithm of HMAC-SHA1, HMAC-SHA256, 3DES, AES, SEED, and HIGHT.

The dart game server 100 may transmit the generated OTP to the user terminal 200. The user may verify the OTP displayed in the user terminal 200 and input the verified OTP in the dart game apparatus 300.

The dart game apparatus 300 may transmit the OTP input by the user to the dart game server 100. In this case, the dart game server 100 compares the OTPs to very whether the OTPs coincide with each other.

When the OTPs coincide with each other, the dart game server 100 may transmit a game start request to the dart game server 100 and the user may start a dart game.

Therefore, the dart game system supporting log-in according to the embodiment of the present disclosure may provide a means which allows the user to perform the log-in in the dart game apparatus 300 by using the user terminal 200 without using a separate card. Further, according to the present disclosure, a physical card such as an RFID may be substituted to save cost and prevent consumption of resources.

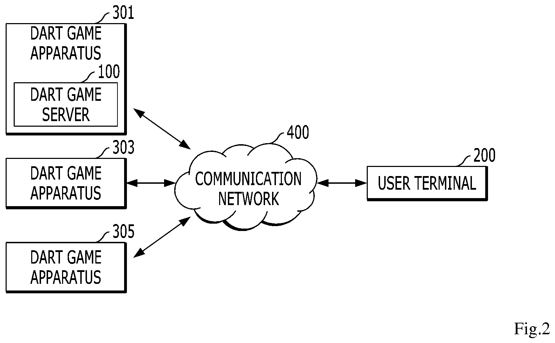

FIG. 2 is a conceptual diagram illustrating an embodiment in which a dart game server is integrally provided in a dart game apparatus according to an embodiment of the present disclosure.

Referring to FIG. 2, the dart game server 100 may be integrally provided in a dart game apparatus 301.

A dart game system operator may install the dart game server 100 in the dart game apparatus 301. For example, the dart game system operator may select any one of dart game apparatuses 301, 303, and 305 and set the selected dart game apparatus as a main dart game apparatus 301. The dart game apparatuses 303 and 305 except for the main dart game apparatus 301 may be constituted by sub dart game apparatuses 303 and 305.

In FIG. 2, it is illustrated that the dart game server 100 is integrally provided in the dart game apparatus 301, but this is exemplary and the dart game server 100 is positioned outside the dart game apparatus 301 to communicate with the dart game apparatus 301.

A plurality of sub dart game apparatuses 303 and 305 may be provided. The main dart game apparatus 300 may be connected with the dart game server 100 installed therein through a network. Further, the main dart game apparatus 301 and one or more sub dart game apparatuses 303 and 305 may be connected to each other through a communication network 400.

Herein, the communication network 400 may include wireless LAN (WLAN), Wi-Fi, wireless broadband (Wibro), world interoperability for microwave access (Wimax), high speed downlink packet access (HSDPA), IEEE 802.16, long term evolution (LTE), wireless mobile broadband service (WMBS), and the like.

Further, a short range communication technology may include Bluetooth, radio frequency identification (RFID), infrared data association (IrDA), ultra wideband (UWB), ZigBee, near field communication (NFC), and the like.

In addition, a wired communication technology may include USB communication, Ethernet, serial communication, optical/coaxial cable, and the like.

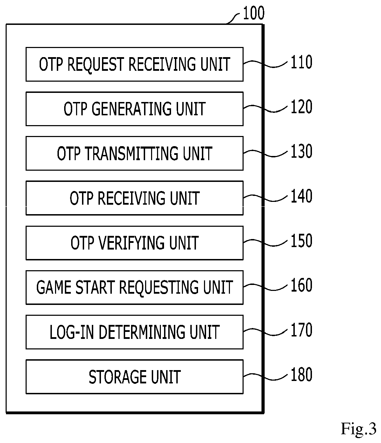

FIG. 3 illustrates an internal configuration diagram of a dart game server according to an embodiment of the present disclosure.

Referring to FIG. 3, the dart game server 100 according to the embodiment of the present disclosure may include an OTP request receiving unit 110, an OTP generating unit 120, an OTP transmitting unit 130, an OTP receiving unit 140, an OTP verifying unit 150, and a game start requesting unit 160.

The OTP request receiving unit 110 may receive a one time password (OTP) request from the user terminal 200. The OTP request may include at least one of the user ID and the terminal identifier. The user ID may be a combination type of characters or figures which the user uses at the time of playing a game in the dart game apparatus 300. The user may previously set the user ID in order to play the game and the user ID may be stored in the dart game server 100.

The dart game server 100 may identify the user by using the user ID. For example, the terminal identifier may include at least one of a phone number of the user terminal 200, a product serial number of the user terminal 200, and the number of a USIM card inserted into the user terminal 200. The phone number of the user terminal 200 may become a unique number which a communication service provider grants to the user. The product serial number of the user terminal 200 may include a number for distinguishing a product at the time of manufacturing the user terminal 200. The number of the USIM card inserted into the user terminal 200 may include the unique number which the communication service provider grants to the USIM card provided to the user terminal 200 in order to use the communication network 400.

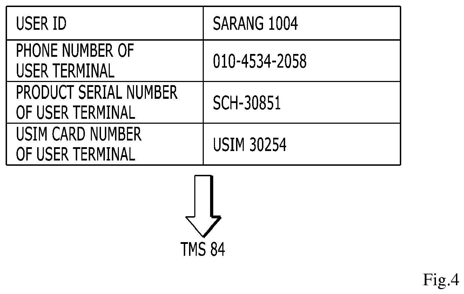

FIG. 4 illustrates a process in which an OTP generating unit generates an OTP according to an embodiment of the present disclosure.

Referring to FIG. 4, the OTP generating unit 120 may generate the OTP based on the user ID and the terminal identifier. For example, when the user ID is SARANG1004, the phone number of the user terminal 200 is 010-4534-2058, the product serial number of the user terminal 200 is SCH-30851, and the number of the USIM card inserted into the user terminal 200 is USIM30254, the OTP generating unit 120 may generate the OTP, that is, TMS84 by using an HMAC-SHA1 algorithm.

As the algorithm used in the embodiment of the present disclosure, an algorithm generally used for assisting appreciation of the present disclosure is introduced and a person who carries out the present disclosure may use OTP generation algorithms of various methods.

Referring to back to FIG. 3, the OTP transmitting unit 130 may transmit the OTP to the user terminal 200. The user terminal 200 may display the OTP (TMS84) so that the user verifies the OTP (TMS84). When the dart game apparatus 300 receives the OTP from the user, the dart game apparatus 300 may transmit the OTP to the dart game server 100. In this case, the dart game apparatus 300 may transmit the OTP by using the various communication networks 400 and the scope of the present disclosure is not limited to a particular communication network 400.

The OTP receiving unit 140 may receive the OTP from the dart game apparatus 300.

The OTP verifying unit 150 may compare the OTP (TMS84) which the OTP transmitting unit 130 transmits to the user terminal 200 and the OTP (TMS84) which the OTP receiving unit 140 receives from the dart game apparatus 300.

When the OTP which the OTP transmitting unit 130 transmits to the user terminal 200 and the OTP which the OTP receiving unit 140 receives from the dart game apparatus 300 do not coincide with each other, the dart game server 100 may request transmitting the OTP again.

In another embodiment, when the OTP which the OTP transmitting unit 130 transmits to the user terminal 200 and the OTP which the OTP receiving unit 140 receives from the dart game apparatus 300 do not coincide with each other, the dart game server 100 may request issuing the OTP again.

When the OTP which the OTP transmitting unit 130 transmits to the user terminal 200 and the OTP which the OTP receiving unit 140 receives from the dart game apparatus 300 coincide with each other, the game start requesting unit 160 may request the dart game apparatus 300 to start the game. In this case, the dart game apparatus 300 may start the dart game. The user may perform the game based on a predetermined user ID.

When the log-in is executed by a plurality of users, the plurality of users may enjoy the game by a method for inputting the respective OTP in one dart game apparatus 300. In the embodiment, the dart game server 100 may include a storage unit 180 storing at least one of the user ID, the terminal identifier, and the OTP.

The storage unit 180 may be provided in the dart game server 100 and positioned in a space separated from the dart game server 100 according to a capacity of data. For example, the storage unit 180 may become a cloud operated online.

In another embodiment, the storage unit 180 may be provided in the dart game server 100 and the storage unit may be at least one type of a flash memory type, a hard disk type, a multimedia card micro type, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

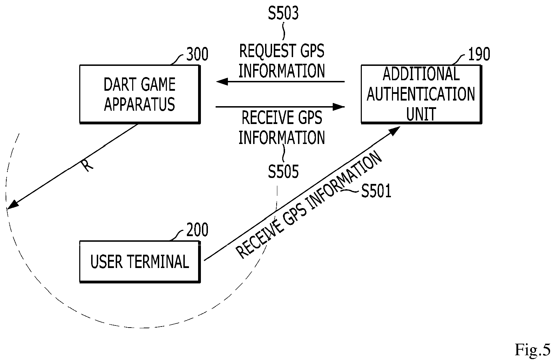

FIG. 5 illustrates an additional authentication unit according to an embodiment of the present disclosure.

Referring to FIG. 5, the dart game server 100 according to the embodiment of the present disclosure may further include an additional authentication unit 190. The additional authentication unit 190 may receive terminal positional information from the user terminal 200 and receive dart game apparatus 300 positional information of the dart game apparatus 300 from the dart game apparatus 300 that transmits the OTP. The additional authentication unit 190 may perform an authentication in which the user terminal 200 executes the log-in in the dart game apparatus 300 by using the terminal positional information and the positional information of the dart game apparatus 300.

In step S501, the additional authentication unit 190 may receive GPS information of the user terminal 200 from the user terminal 200.

In step S503, the additional authentication unit 190 may request the GPS information to the dart game apparatus 300. In this case, the additional authentication unit 190 may request the GPS information of the corresponding dart game apparatus 300 by searching the dart game apparatus 300 that transmits the OTP to the dart game server 100.

In step S505, the additional authentication unit 190 may receive the GPS information of dart game apparatus from the dart game apparatus. The additional authentication unit 190 compares the GPS information received from the user terminal 200 and the GPS information received from the dart game apparatus 300 to very whether the user terminal 200 is positioned in a predetermined radius R from the dart game apparatus 300.

When the additional authentication unit 190 determines that the user terminal 200 is positioned in the predetermined radius R, the additional authentication unit 190 may request the game start to the game start requesting unit 160. When the user terminal 200 is positioned over a predetermined distance, the additional authentication unit 190 may request obtaining the OTP again.

In the embodiment, the positional information of the user terminal 200 and the dart game server 100 is described while being limited to the GPS information, but the positional information may include various information such as global positioning system (GPS), geographic information systems (GIS), and intelligent transport systems (ITS) and the scope of the present disclosure is not limited to specific positional information.

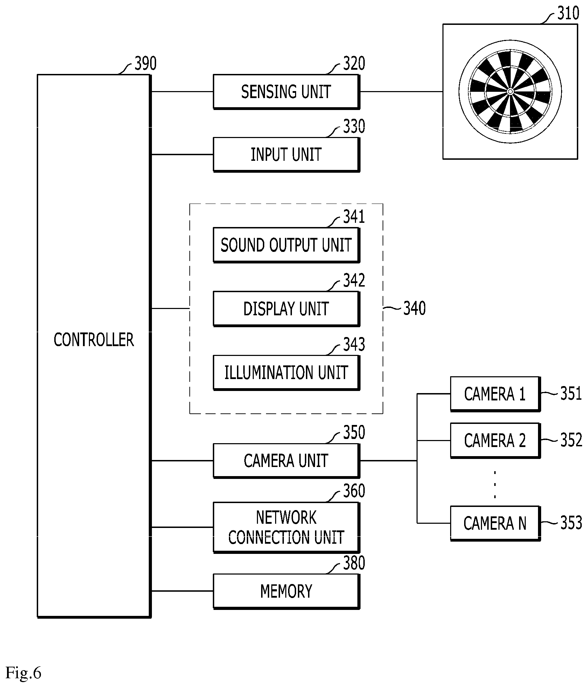

FIG. 6 is a block diagram illustrating a dart game apparatus according to an embodiment of the present disclosure.

Referring to FIG. 6, the dart game apparatus 300 according to the embodiment of the present disclosure may include a dart target 310, a sensing unit 320, an input unit 330, an output unit 340, a camera unit 350, a network connection unit 360, a memory 380, and a controller 390.

The components illustrated in FIG. 6 are not required. Therefore, the dart game apparatus 300 having more components therethan or less components therethan may be implemented. Hereinafter, the components will be described in sequence.

The dart target 310 may include a score board in which a bullseye is positioned at the center and there are areas segmented by a concentric circle centering the bullseye and straight lines extended radially from the bullseye and granted with individual scores, respectively. Multiple holes into which a tip of a dart may be inserted may be formed on the score board.

The dart target 310 includes a display 342 to be described below to variably change score deployments of the dart target 310 and shapes of areas granted with the scores. In this case, the dart target 310 includes a light transmissive touch pad to be stacked in the display 342 to take a form of a touch screen.

The sensing unit 320 may sense a play of a dart game user performed with respect to the dart target 310. The sensing unit 320 may enable the play of an actual game user to be evaluated.

The sensing unit 320 may sense which area of the dart target 110 a thrown dart pin hits, with respect to a play in which the user throws the dart pin. The sensing unit 320 electrically converts a score corresponding to the area which the dart pin hits to transmit the converted score to the controller 390. Alternatively, the sensing unit 320 may transmit an electrical signal corresponding to the area where the dart pin hits to the controller 390 and herein, the controller 390 may calculate a score corresponding to the electrical signal.

The input unit 330 receives an input of the player for controlling the dart game apparatus 300. The input unit 330 may include a keypad, a dome switch, a touch pad (resistive/capacitive), a jog wheel, a jog switch, and the like.

The input unit 330 may operate a virtual keyboard 345 displayed in the display unit 342. The input unit 330 may include an upward movement button 331, a downward movement button 332, a leftward movement button 333, and a rightward movement button 334 in order to operate the virtual keyboard 345. Further, the input unit 330 may further include an input button 335 capable of inputting characters or symbols selected in the virtual keyboard 345. The user may input the OTP in the dart game apparatus 300 by using the upward movement button 331, the downward movement button 332, the leftward movement button 333, the rightward movement button 334, and the input button 335.

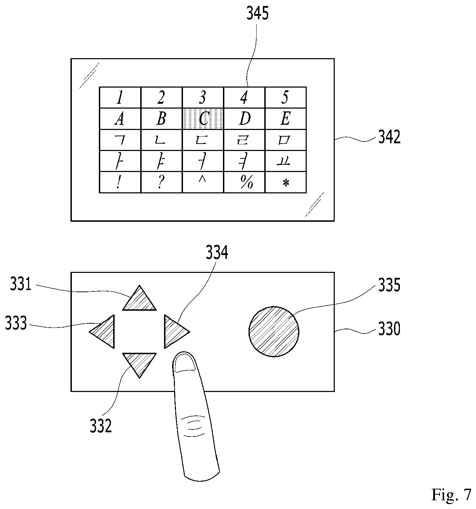

For a moment, referring to FIG. 7, the user may select the characters shown in the virtual keyboard 345 by pressing the rightward movement button 334. Whenever the user presses an additional button, the characters shown in the virtual keyboard 345 may move while being inverted. When the characters to be input by the user are inverted, the user may finally input the characters or symbols by pressing the input button 335.

Referring back to FIG. 6, the user may select a dart game mode, a match making request, a match approval, the number of dart game players, a dart game play mode, and the like through the input unit 330.

For example, the user may select the number of dart game players, the dart game play mode (a zero one game, a cricket game, a count-up game, and the like), the dart game mode (a single play, a network play, and the like), an offline match making request, and the match approval through the input unit 330.

The input unit 330 receives a signal by sensing a key operation or a touch input of the user or receives speech or a motion through cameras 351 to 353 or a microphone of the user to convert the received signal, speech, or motion into an input signal. To this end, a known speech recognition technology or a motion recognition technology may be used.

The output unit 340 which is used for generating an output related with sight, hearing, or touch may include a sound output unit 341, a display unit 342, an illumination unit 343, and the like.

The sound output unit 341 may output audio data received from the network connection unit 360 or stored in the memory 380 in a game sound effect, a game motion guide, a game method description, and the like. The sound output unit 341 may also output a sound signal related with a function (e.g., a game effect sound) performed by the dart game apparatus 300. The sound output unit 341 may also output a speech of a game player or a third person using another dart game apparatus 300, which is received through the network connection unit 360. The sound output unit 341 may include a receiver, a speaker, a buzzer, and the like.

The display unit 342 displays (outputs) information processed in the dart game apparatus 300. For example, when the dart game apparatus 300 is in a game play mode guidance mode, the display unit 342 may output a selectable game play mode. Additionally, when the dart game apparatus 300 receives an offline match making request, the display unit 342 may output a match making stand-by player list. Further, when the dart game apparatus 300 is playing the game, the display unit 342 may display the score sensed through the sensing unit 320 or output an image acquired by photographing the game player or the third person using another dart game apparatus 300, which is received through the network connection unit 360.

The display unit 342 may include at least one of a liquid crystal display (LCD), a thin film transistor-liquid crystal display (TFT LCD), an organic light-emitting diode (OLED), a flexible display, and a 3D display. Some of the displays may be configured as a transparent or light transmissive type to view the outside through the displays. This may be called a transparent display and a representative example of the transparent display includes a transparent OLED (TOLED), and the like.

In the embodiment of the present disclosure, according to an implementation form of the dart game apparatus 300, two or more display units 342 may exist. For example, in the dart game apparatus 300, the plurality of displays may be separated from each other or integrally disposed on one surface, and further, disposed on different surfaces, respectively. For example, the display unit 342 may include both a display disposed at an upper end of the dart target 310 and a display unit 342 disposed at a lower end of the dart target 310, or may include one display unit 342 thereof. However, a location where the aforementioned displays are disposed is simply an example, and the display may be disposed at various locations for a demand due to a design or a visual effect.

The touch sensor may be configured to convert a change in pressure applied to a specific portion of the display unit 342 or capacitance generated at the specific portion of the display unit 342 into an electrical input signal. The touch sensor may be configured to detect touch pressure as well as a touched position and area. When there is a touch input for the touch sensor, a signal(s) corresponding to the touch input is(are) sent to a touch controller. The touch controller processes the signal(s) and thereafter, transmits data corresponding thereto to the controller 390. As a result, the controller 390 may know which area of the display unit 342 is touched.

The illumination unit 343 outputs a signal for notifying occurrence of an event of the dart game apparatus 300. Examples of the event which occurs from the dart game apparatus 300 include identification of the dart game player, direct hit of the dart, a change of the dart game player, game over, and the like. The illumination unit 343 may include a light emission diode (LED) and notify the occurrence of the event to the user through flickering of the LED. The LEDs are disposed on the bottom of the dart target 310 to be flickered according to a flickering pattern which is pre-stored according to the occurrence of the event. For example, one or more LEDs may be allocated to respective parts of the dart target 310. The allocated LEDs are disposed on the bottom of the dart target 310 and may be disposed in a direction orienting the outside of the dart game apparatus 300. When the LEDs irradiate light, the light irradiated by the LEDs may pass through the dart target 310 made of a transparent or translucent material to transfer a visual output to the user. Alternatively, the light irradiated by the LEDs may transfer the visual output to the user through a gap existing in the dart target 310.

The output unit 340 may also output another form other than a video signal or an audio signal, for example, a signal for notifying the occurrence of the event by vibration. The output unit 340 may include the sound output unit 341, the display unit 342, and the illumination unit 343. For example, the output unit 340 may output the information on the measured speed of the dart pin and/or the reward therefor by various methods.

The camera unit 350 includes multiple cameras 351 to 353, and as a result, an image frame processed by the cameras 351 to 353 may be stored in the memory 380 or transmitted to the outside through the network connection unit 360. The camera unit 350 may be constituted by one camera or constituted by two or more cameras according to a use environment.

In the aspect of the present disclosure, the camera unit 350 may be disposed to photograph two or more points on a movement route of the dart pin. In the aspect of the present disclosure, the camera unit 350 may include a plurality of cameras and the respective cameras may be disposed to photograph point(s) corresponding thereto, respectively.

In an aspect of the present disclosure, t least some cameras of the camera unit 350 may be disposed to photograph an image frame including the dart target 310 and some other cameras may be disposed to photograph an image frame directly related with a game rule in the dart game play. For example, the camera may be disposed to photograph a throw-line on which the dart is thrown in order to photograph the image frame directly related with the dart game rule. The multiple cameras 351 to 353 included in the camera unit 350 may be disposed to photograph at least some image frames to overlap with each other. In the embodiment of the present disclosure, when the camera unit 350 includes one camera, the camera may be a panoramic camera disposed to photograph both at least a part of the dart target 310 and the image frame (e.g., the throw-line in the dart game) directly related with the game rule.

The network connection unit 360 may include one or more modules that enable wireless communication between the dart game apparatus 300 and a wired/wireless communication system or between the dart game apparatus 300 and a network on which the dart game apparatus 300 is positioned. In the embodiment of the present disclosure, the network connection unit 360 may include a transmitting unit and a receiving unit. The network connection unit 360 may include a wired/wireless Internet module for accessing the network. As the wireless Internet technology, wireless LAN (WLAN) (Wi-Fi), wireless broadband (Wibro), world interoperability for microwave access (Wimax), high speed downlink packet access (HSDPA), or the like, may be used. As wired Internet technology, digital subscriber line (XDSL), fibers to the home (FTTH), power line communication (PLC), or the like may be used.

Further, the network connection unit 360 includes a short-range communication module to transmit and receive data to and from an electronic apparatus positioned in a comparatively short range from the dart game apparatus 300 and including the short-range communication module. As short range communication technology, Bluetooth, radio frequency identification (RFID), infrared data association (IrDA), ultra wideband (UWB), ZigBee, or the like may be used. In the embodiment of the present disclosure, the network connection unit 360 may sense a connection state of the network and a transceiving speed of the network. Data received through the network connection unit 360 may be output through the output unit 340, stored through the memory 380, or transmitted to other electronic apparatuses positioned in a short range through the short-range communication module.

The memory 380 may store a program for a motion of the controller 390 therein and temporarily or permanently store input/output data (e.g., a phone book, a message, a still image, a moving picture, or the like) therein. The memory 380 may store data regarding various patterns of vibrations and sounds output during the touch input on the touch screen. The memory 380 may include at least one type of storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The dart game apparatus 300 may operate in connection with a web storage performing a storing function of the memory 380 on the Internet.

The controller 390 generally controls all motions of the dart game apparatus 300. For example, in the case of the dart game, the score sensed through the sensing unit 320 is collected for each game participant, the collected score is transmitted to and received from another dart game apparatus 300 connected through the network, and a game winning/losing record, the score, and the like according to the collected result are recorded. The controller 390 may perform pattern recognition processing to recognize a motion input, a write input, and the like performed on the touch screen or camera as a text or an image. Further, the controller may perform speech recognition by using a speech-to-text (STT) function to recognize the speech input through the microphone as the text.

In an aspect of the present disclosure, when the controller 390 senses that the capacity of the memory is exceeded, the controller 390 may allow the image to be deleted in the oldest image order among the photographed data stored in the memory 380. In addition, the controller 390 may control the memory 380 to delete the unloaded photographed data after a specific time period.

As illustrated in FIG. 6, since the controller 390 may communicate with all of the above-mentioned other components, the controller 190 may organically control operations of the corresponding components.

Various embodiments described herein may be implemented in a computer-readable recording medium or a recording medium readable by a device similar to the computer by using, for example, software, hardware, or a combination thereof. According to hardware implementation, the embodiment described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electric units for performing other functions. In some cases, the embodiments described in the specification may be implemented by the controller 390 itself. According to software implementation, embodiments such as a procedure and a function described in the specification may be implemented by separate software modules. Each of the software modules may perform one or more functions and operations described in the specification. A software code may be implemented by a software application written by an appropriate program language. The software code may be stored in the memory 380 and executed by the controller 390.

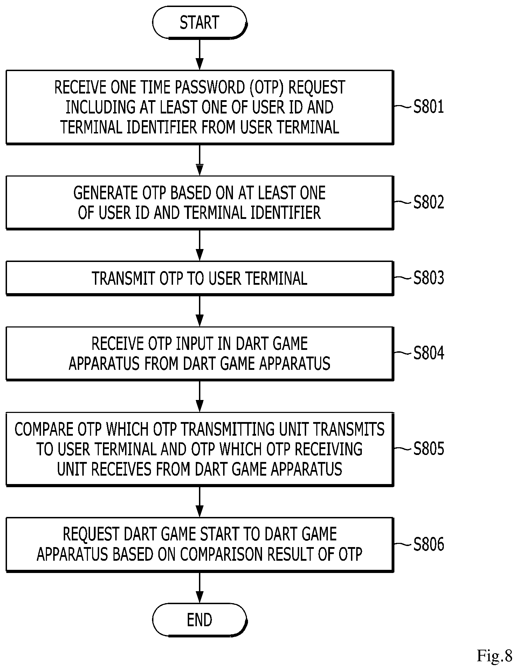

FIG. 8 is a flowchart illustrating a method for supporting log-in according to an embodiment of the present disclosure.

Referring to FIG. 8, a one time password (OTP) request including at least one of a user ID and a terminal identifier may be received from a user terminal in step S801.

In step S802, a dart game server 100 may generate an OTP based on at least one of the user ID and the terminal identifier.

In step S803, the dart game server 100 may transmit the OTP to a user terminal 200.

In step S804, the dart game server 100 may receive the OTP input in a dart game apparatus 300 from the dart game apparatus 300.

In step S805, an OTP transmitting unit 130 may compare the OTP which an OTP transmitting unit 130 transmits to the user terminal 200 and the OTP which an OTP receiving unit 140 receives from the dart game apparatus 300.

In step S806, the dart game server 100 may request a dart game start to the dart game apparatus 300 based on a comparison result of the OTP.

A method for supporting log-in illustrated in FIG. 8 may be stored in a computer readable medium and implemented by a computer program which is allowed to be executed by a computer.

Various embodiments described herein may be implemented in a computer-readable recording medium or a recording medium readable by a device similar to the computer by using, for example, software, hardware, or a combination thereof. According to hardware implementation, the embodiment described herein may be implemented by using at least one of the application specific integrated circuits (ASICs), the digital signal processors (DSPs), the digital signal processing devices (DSPDs), the programmable logic devices (PLDs), the field programmable gate arrays (FPGAs), the processors, the controllers, the micro-controllers, the microprocessors, and the electric units for performing other functions. In some cases, the embodiments described in the specification may be implemented by the controller 390 itself. According to software implementation, embodiments such as a procedure and a function described in the specification may be implemented by separate software modules. Each of the software modules may perform one or more functions and operations described in the specification. A software code may be implemented by a software application written by an appropriate program language. The software code may be stored in the memory 380 and executed by the controller 390.

It will be appreciated by those skilled in the art that information and signals may be expressed by using various different predetermined technologies and techniques. For example, data, instructions, commands, information, signals, bits, symbols, and chips which may be referred in the above description may be expressed by voltages, currents, electromagnetic waves, magnetic fields or particles, optical fields or particles, or predetermined combinations thereof.

Those skilled in the art of the present disclosure will appreciate that various exemplary logic blocks, modules, processors, means, circuits, and algorithm steps can be implemented by electronic hardware, various types of programs or design codes (designated as "software" herein for easy description), or a combination thereof described in association with the embodiments disclosed herein. In order to clearly describe the intercompatibility of the hardware and the software, various exemplary components, blocks, modules, circuits, and steps have been generally described above in association with functions thereof. Whether the functions are implemented as the hardware or software depends on design restrictions given to a specific application and an entire system. Those skilled in the art of the present disclosure may implement functions described by various methods with respect to each specific application, but it should not be analyzed that the implementation determination departs from the scope of the present disclosure.

Further, various embodiments presented herein may be implemented as manufactured articles using a method, an apparatus, or a standard programming and/or engineering technique. The term "manufactured article" includes a computer program, a carrier, or a medium which is accessible by a predetermined computer-readable device. For example, a computer-readable medium includes a magnetic storage device (for example, a hard disk, a floppy disk, a magnetic strip, or the like), an optical disk (for example, a CD, a DVD, or the like), a smart card, and a flash memory device (for example, an EEPROM, a card, a stick, a key drive, or the like), but is not limited thereto. Further, various storage media presented herein include one or more devices and/or other machine-readable media for storing information. The term "machine-readable media" include a wireless channel and various other media that can store, posses, and/or transfer command(s) and/or data, but are not limited thereto.

It will be appreciated that a specific order or a hierarchical structure of steps in the presented processes is one example of exemplary accesses. It will be appreciated that the specific order or the hierarchical structure of the steps in the processes within the scope of the present disclosure may be rearranged based on design priorities. Appended method claims provide elements of various steps in a sample order, but it does not mean that the method claims are limited to the presented specific order or hierarchical structure.

The present disclosure has been described with reference to the preferred embodiments. However, it will be appreciated by those skilled in the art that various modifications and changes of the present disclosure can be made without departing from the spirit and the scope of the present disclosure which are defined in the appended claims and their equivalents.

### [Mode for Invention]

Related contents in the best mode for carrying out the present disclosure are described.

### [Industrial Applicability]

The present disclosure may be used in a digital device, a dart device, a dart game device, an entertainment device, a dart server, and the like.

### [Sequence Text List]

100: Dart game server
110: OTP request receiving unit
120: OTP generating unit
130: OTP transmitting unit
140: OTP receiving unit
150: OTP verifying unit
160: Game start requesting unit
170: Log-in determining unit
180: Storage unit
190: Additional authentication unit
200: User terminal
300, 301, 302: Dart game apparatus
310: Dart board
320: Sensing unit
330: Input unit
331: Upward movement button
332: Downward movement button
333: Leftward movement button
334: Rightward movement button
335: Input button
340: Output unit
341: Sound output unit
342: Display unit
343: Illumination unit
345: Virtual keyboard
350, 351, 352: Camera unit
360: Network connection unit
360: Input unit
380: Memory
390: Controller
400: Communication network

## Claims

1. A dart game server comprising:
an OTP request receiving unit receiving a one time password (OTP) request including at least one of a user ID and a terminal identifier from a user terminal;
an OTP generating unit generating an OTP based on at least one of the user ID and the terminal identifier;
an OTP transmitting unit transmitting the OTP to the user terminal;
an OTP receiving unit receiving the OTP input in a dart game apparatus from the dart game apparatus;
an OTP verifying unit comparing the OTP which the OTP transmitting unit transmits to the user terminal and the OTP which the OTP receiving unit receives from the dart game apparatus with each other; and
a game start requesting unit requesting a dart game start to the dart game apparatus based on a comparison result of the OTP.

2. The dart game server of claim 1, further comprising:
a log-in determining unit executing log-in so as to perform a game in the dart game apparatus when the comparison results of the OTP coincide with each other.

3. The dart game server of claim 1, wherein the dart game server is integrally provided in the dart game apparatus.

4. The dart game server of claim 1, wherein the terminal identifier includes at least one of a phone number of the user terminal, a product serial number of the user terminal, and the number of a USIM card inserted into the user terminal.

5. The dart game server of claim 1, further comprising:
a storage unit storing at least one of the user ID, the terminal identifier, and the OTP.

6. The dart game server of claim 1, further comprising:
an additional authentication unit receiving terminal positional information from the user terminal and receiving dart game apparatus positional information of the dart game apparatus from the dart game apparatus transmitting the OTP to perform an authentication for the log-in in the dart game apparatus by using the terminal positional information and the dart game apparatus positional information.

7. The dart game server of claim 6, wherein the positional information includes at least one of global positioning system (GPS), geographic information systems (GIS), and intelligent transport systems (ITS).

8. A dart game apparatus comprising:
a display unit displaying information on the dart game apparatus; and
an input unit operating a virtual keyboard displayed in the display unit,
wherein a user terminal receives an OTP which a user terminal receives from a dart game server according to an operation of the input unit.

9. The dart game apparatus of claim 8, wherein the input unit includes an upward movement button, a downward movement button, a leftward movement button, a rightward movement button, and an input button.

10. A dart game system supporting log-in, comprising:
a dart game server receiving a one time password (OTP) request including at least one of a user ID and a terminal identifier from a user terminal, generating an OTP based on at least one of the user ID and the terminal identifier, transmitting the OTP to the user terminal, receiving the OTP input in a dart game apparatus from the dart game apparatus, comparing the OTP which the OTP transmitting unit transmits to the user terminal and the OTP which the OTP receiving unit receives from the dart game apparatus, and requesting a dart game start to the dart game apparatus based on a comparison result of the OTP;
a user terminal requesting an OTP request including at least one of the user ID and the terminal identifier to the dart game server, acquiring the OTP from the dart game server, and displaying the OTP to be verified; and
a dart game apparatus displaying information on the dart game apparatus in a display unit and receiving the OTP which the user terminal receives from the dart game server according to an operation of a button unit that operates a virtual keyboard displayed in the display unit.

11. A computer program stored in a computer readable medium and causing a computer to execute the steps comprising:
receiving a one time password (OTP) request including at least one of a user ID and a terminal identifier from a user terminal;
generating an OTP based on at least one of the user ID and the terminal identifier;
transmitting the OTP to the user terminal;
receiving the OTP input in a dart game apparatus from the dart game apparatus;
comparing the OTP which the OTP transmitting unit transmits to the user terminal and the OTP which the OTP receiving unit receives from the dart game apparatus; and
requesting a dart game start to the dart game apparatus based on a comparison result of the OTP.
